# FASCICULE DE BREVET EUROPEEN

(11) **EP 1 580 120 B1**
(45) Date de publication et mention de la délivrance du brevet: **15.01.2020**
(21) Numéro de dépôt: 05102420.6
(22) Date de dépôt: 24.03.2005
(51) Int. Cl.: B64C 3/18, B64C 3/34

(54) **DISPOSITIF DE RENFORT DE STRUCTURE EN CAISSON POUR AÉRONEF**
VERSTÄRKUNGSVORRICHTUNG EINER FLUGZEUGKASTENSTRUKTUR
REINFORCEMENT DEVICE FOR AIRCRAFT BOX STRUCTURE

(30) Priorité: 25.03.2004 FR 0403089
(43) Date de publication de la demande: 28.09.2005
(73) Titulaire: AIRBUS OPERATIONS (S.A.S), 31060 Toulouse (FR)
(72) Inventeur: Gay, Stéphane, 31400 Toulouse (FR)
(74) Mandataire: Gicquel, Olivier Yves Gérard

(56) Documents cités:
- FR-A- 933 229
- GB-A- 367 048
- GB-A- 439 954
- US-A- 2 382 357
- PATENT ABSTRACTS OF JAPAN vol. 2003, no. 12, 5 décembre 2003 (2003-12-05) -& JP 2003 342957 A (KITAGAWA KAZUHIKO), 3 décembre 2003 (2003-12-03)

## Description

La présente invention concerne le renfort de structures creuses et notamment de structures en caisson pour aéronefs.

Les structures en caisson d'aéronefs ou d'autres véhicules doivent participer à la rigidité du véhicule, et, par exemple dans le cas d'un caisson central de voilure d'un aéronef, la structure subit d'importantes charges mécaniques et doit donc posséder une bonne résistance en fatigue pour réduire les départs de crique sous charge, notamment en vol et au sol. A fortiori si le caisson est utilisé comme réservoir de carburant, il doit posséder une bonne résistance statique en cas de décélération brutale. Il doit en outre rester de masse réduite, même dans le cas d'aéronefs de grandes dimensions, et être aisé à assembler.

Il est connu de disposer des treillis de bielles à l'intérieur de structures en caisson pour réaliser des nervures de renfort et, à cet effet, ces treillis sont fixés sur les panneaux internes constituant les caissons.

La construction traditionnelle des caissons équipés de treillis de bielle repose sur une règle d'optimisation du nombre de bielles basée sur le principe de réalisation d'un système triangulé isostatique, dans lequel les bielles et les segments de panneaux entre bielles sont assimilés à des barres et les points de liaison entre les bielles et les panneaux du caisson et entre les panneaux du caisson sont assimilés à des noeuds. Le système est dit isostatique et le nombre de barres est optimal lorsque l'on respecte la relation 2n - 3 = b dans laquelle n est le nombre de noeuds et b le nombre de barres.

Dans le cas où 2n - 3 est inférieur à b, le système est hyperstatique indéformable, mais il y a b - (2n - 3) barres surabondantes.

Dans le cas où 2n - 3 est supérieur à b le système est hyperstatique déformable et il y a (2n - 3) - b barres manquantes.

Il reste que cette définition est une règle théorique et qu'elle ne prend pas en compte des contraintes particulières de construction du caisson telles que la nécessité de renforcer certaines parties du caisson, notamment la partie avant du caisson susceptible de subir, lors d'un choc, l'impact du carburant ou d'objets contenu dans le caisson.

Le document US2382357 décrit une structure comportant une peau ayant une pluralité de lisses, une pluralité de nervures généralement parallèles aux lisses ainsi que des éléments de renfort disposés de part et d'autre de la structure de telle sorte que sa fabrication en soit facilitée et qu'elle puisse résister aux efforts auxquels elle est soumise.

Le document GB439954 décrit une aile d'avion recouverte d'un capot de carénage comportant un élément principal ayant deux voiles latéraux reliés ensemble par des embases supérieures et inférieures afin de former une poutre correspondant approximativement au profil de l'aile.

La présente invention concerne la réalisation d'une structure creuse, telle qu'un caisson, renforcée par un dispositif de renfort constitué par un treillis de bielles, le treillis étant optimisé pour minimiser le nombre de bielles, tout en conservant une rigidité importante de la structure, et en renforçant des zones particulières de la structure en caisson telles que la partie avant du caisson.

La présente invention est notamment adaptée à la réalisation de caissons cloisonnés.

Dans ce but, la présente invention concerne une structure creuse en caisson de véhicules, en particulier d'aéronef selon la revendication 1.

La structure ainsi constituée est isostatique et comporte le nombre de bielles optimal. Elle forme une structure renforcée apte à supporter des contraintes importantes aussi bien en dynamique en vol que dans les phases d'atterrissage et de décollage. En outre, lorsqu'elle est utilisée pour réaliser un caisson réservoir de carburant, cette structure renforcée est susceptible de résister à la pression du carburant appliquée sur le panneau avant en cas de décélération brutale.

Plus particulièrement, outre les première, deuxième et troisième bielles le dispositif comporte p autres bielles reliant certains des panneaux inférieur supérieur et arrière, le nombre total de bielles additionné au nombre de sections de panneaux entre bielles et de panneaux entre eux étant égal au double de la somme du nombre total de nœuds de liaison entre bielles et panneaux et du nombre de liaisons entre panneaux.

L'invention concerne en outre une structure creuse, telle qu'un caisson d'aéronef, comprenant un panneau avant, un panneau supérieur, un panneau inférieur et un panneau arrière et pourvue d'un dispositif de renfort à bielles, caractérisée en ce que le dispositif de renfort à bielles comporte un premier triangle de renfort dit triangle de renfort avant, constitué par trois bielles reliées deux à deux, fixé par ses sommets au panneau avant et aux panneaux supérieur et inférieur.

Plus particulièrement, le sommet du triangle de renfort avant fixé au panneau avant est fixé en position sensiblement médiane de la hauteur du panneau avant.

Selon l'invention, la structure comprend au moins une cloison intermédiaire entre le panneau avant et le panneau arrière et définissant un caisson avant et un caisson arrière, un deuxième triangle de renfort, dit triangle de renfort intermédiaire, étant réalisé au niveau de la cloison intermédiaire, le deuxième triangle étant en outre disposé dans le caisson arrière.

En mode de réalisation particulier, la structure peut avantageusement comprendre un triangle de renfort arrière, constitué de trois bielles reliées deux à deux, fixé par ses sommets au panneau arrière et aux panneaux supérieur et inférieur.

La structure peut de plus être pourvue de n bielles reliant les panneaux, le nombre total de bielles additionné au nombre de sections de panneaux entre bielles étant égal au double de la somme du nombre total de noeuds de liaison entre bielles et panneaux et du nombre de liaisons entre panneaux, caractérisée en ce qu'elle comporte une pluralités de triangles de renfort longitudinaux, chaque triangle longitudinal comportant une pointe fixée en partie sensiblement médiane d'un élément de renfort vertical solidaire des panneaux inférieur et supérieur.

Toujours selon l'invention, la structure peut comporter une pluralités de caissons longitudinaux, chaque caisson longitudinal comportant une paroi avant constituant ledit élément de renfort vertical.

La structure peut notamment constituer un caisson central d'aéronef dont au moins une partie reçoit du carburant.

D'autres caractéristiques et avantages de l'invention apparaîtront à la lecture de la description qui va suivre d'exemples de réalisation particuliers et non limitatifs de l'invention en référence aux figures qui représentent :
- figure 1 :: un schéma de principe d'une réalisation de structure isostatique de l'art antérieur ;
- figure 2 :: un schéma de principe d'une structure réalisée conformément à l'invention ;
- figures 3a et 3b :: un détail de la partie avant de la structure de la figure 2 respectivement à vide et en charge;
- figure 4 :: un détail de la partie avant de la structure de la figure 2 soumise à un effort de compression.

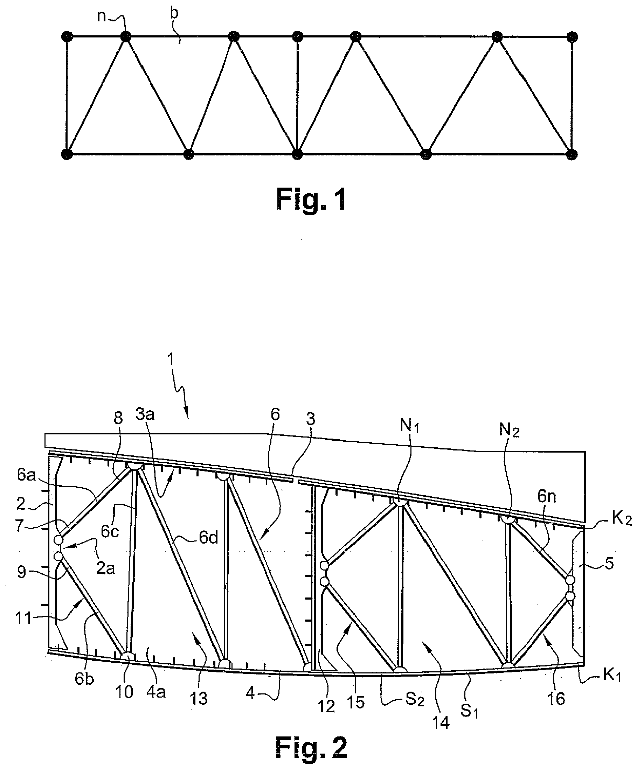

La figure 1 représente un schéma de réalisation d'un caisson assimilé à un système triangulé isostatique théorique. Selon ce schéma, les intersections d'éléments sont appelés des nœuds n et les segments entre noeuds des barres b.

Dans le cas d'un caisson les barres sont aussi bien des segments de caisson que des bielles.

Dans ce système, l'isostatisme obtenu avec un nombre de barres optimal, puisqu'il y a 12 nœuds n et 21 barres b, ce qui satisfait la relation 2n-3=b.

Ce système n'est toutefois pas optimisé dans le cas d'applications de contraintes sur des parties déterminées du caisson, ces contraintes pouvant être la pression du carburant contenu dans le caisson sur le panneau avant lors d'une décélération brutale ou l'application d'une pression cabine sur la structure qui a tendance à faire fléchir les panneaux avant et arrière, cette pression venant de l'extérieur de la structure et constituant une charge génératrice de fatigue qui se reproduit à chaque mise en pression de la cabine.

La figure 2 représente un exemple de réalisation d'un dispositif de renfort de structures creuses 1, telles que caissons d'aéronefs, selon l'invention.

La structure creuse représentée est un caisson central d'aéronef, ce caisson se trouvant au niveau de l'emplanture.

La structure est constituée d'un panneau avant 2, d'un panneau supérieur 3, d'un panneau inférieur 4 et d'un panneau arrière 5.

Ces panneaux sont assemblés de manière traditionnelle et comportent des pattes d'ancrage 20a et 20b sur lesquelles sont fixées des bielles de renfort 6a, 6b, ..., 6n disposées en treillis.

La solution selon l'invention est d'adapter localement l'architecture du treillis de bielles en vue de créer une fonction de triangulation et notamment un point d'appui médian sur les montants de longerons de panneaux verticaux tel le panneau avant.

La structure choisie est d'utiliser un dispositif de renfort comportant un réseau de bielles 6a, 6b, ..., 6n en treillis, dont les extrémités sont fixées aux panneaux 2, 3, 4, 5 constituant la structure. Le treillis est agencé de telle sorte qu'une première bielle 6a et une deuxième bielle 6b soient inclinées et comportent une première extrémité 7, 9 fixée sur un flanc interne 2a du panneau avant 2, leurs secondes extrémités 8, 10 étant fixées respectivement sur un flanc interne 3a du panneau supérieur 3 et sur un flanc interne 4a du panneau inférieur 4. Une troisième bielle 6c sensiblement verticale relie lesdites secondes extrémités 8, 10 des première et deuxième bielles 6a, 6b de sorte que les première, deuxième et troisième bielles 6a, 6b, 6c constituent un triangle de renfort 11 au niveau du panneau avant.

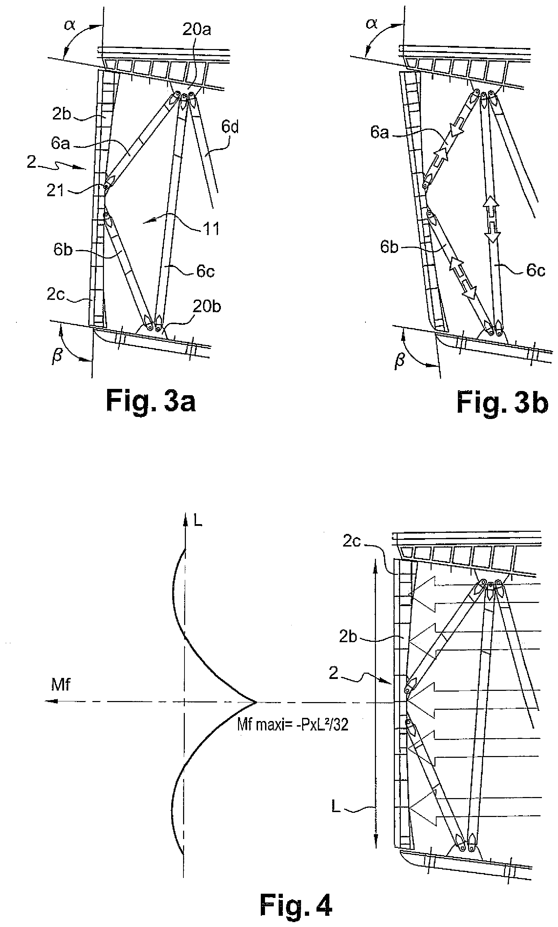

Ainsi, comme représenté en figure 3a, un triangle de renfort du panneau avant 2 est constitué avec les bielles 6a, 6b et 6c fixées sur les pattes de fixation 20a, 20b par des boulons 21.

Le treillis se prolonge par une bielle 6d fixée à la patte de fixation 20a et reliant le panneau supérieur 3 au panneau inférieur 4 selon une inclinaison compatible avec la réalisation du treillis qui, pour respecter l'isostatisme à nombre optimal de bielles, comporte p autres bielles 6d, ..., 6n reliant certains des panneaux inférieur 4 supérieur 3 et arrière 5, le nombre total de bielles 6a, 6b, ... , 6n additionné au nombre de sections S1, S2, ... de panneaux entre bielles et de panneaux entre eux étant égal au double de la somme du nombre total de noeuds N1, N2, .... de liaison entre bielles et panneaux et du nombre de liaisons K1, K2, ... entre panneaux.

La triangulation du panneau avant par le treillis de bielle permet une refermeture locale des efforts dans la nervure en treillis de bielles et réalise un module de triangulation qui contribue au blocage de la déformation du caisson et à la limitation des efforts internes dans les bielles.

Le panneau avant 2 notamment comporte des montants 2b, disposés longitudinalement le long du panneau, et une peau 2c et constitue un longeron structurel du caisson. La fixation des bielles est réalisée sur les montants 2b du panneau.

Les première et deuxième bielles (6a, 6b) sont dimensionnées de telle sorte que le sommet du triangle de renfort avant 11 est fixé au montant 2b du panneau avant 2 en position sensiblement médiane de la hauteur du panneau avant 2.

Le raccordement des première et deuxième bielles 6a, 6b au niveau d'un point d'appui médian du panneau avant 2 permet d'alléger la structure des montants 2b de ce panneau par la création d'un appui supplémentaire sur un axe médian du longeron constitué par ce panneau. En outre, la réalisation de ce point d'appui médian permet de limiter le moment de flexion dans le montant 2b sur lequel sont fixées les bielles.

Une illustration de l'avant de la structure d'un caisson central d'aéronef est donnée à l'état de repos par la figure 3a et en vol par la figure 3b.

A l'état de repos représenté en figure 3a, aucune contrainte autre que le poids de l'aéronef ne s'applique et la structure au niveau du triangle 11 est en équilibre sans déformation. Les angles α et β représentés sur la figure sont les angles définis entre le panneau avant et respectivement le panneau inférieur et le panneau supérieur.

La figure 3b représente la structure au niveau du panneau avant en vol. Les contraintes aérodynamiques appliquées sur les ailes causent une déformation du caisson telle que les angles α et β varient, l'angle α devenant plus aigu alors que l'angle β augmente. Les niveaux d'efforts engendrés par cette déformation sont très importants. La disposition des bielles en triangle permet de limiter cette déformation. Les bielles 6a et 6b permettent de limiter les variations de ces angles en rigidifiant la zone avant du caisson. La bielle 6c rend la triangulation effective et équilibre les efforts représentés par des flèches dans les deux autres bielles.

Cette configuration qui augmente le nombre de bielles localement permet de réduire les sections des bielles et de réduire significativement la masse du treillis de bielles.

Ainsi, les valeurs d'efforts et de moments dans les montants et les valeurs d'efforts dans les bielles sont diminuées par rapport au treillis de bielles traditionnel de la figure 1.

La structure est généralisée en réalisant au moins une cloison intermédiaire 12 entre le panneau avant 2 et le panneau arrière 5 et en triangulant la cloison intermédiaire.

De cette manière sont définis un caisson avant 13 et un caisson arrière 14.

Le caisson arrière comporte un deuxième triangle de renfort, dit triangle de renfort intermédiaire 15, réalisé au niveau de la cloison intermédiaire 12 et un troisième triangle de renfort, dit triangle arrière 16, pour accroître encore le gain en masse des bielles et la rigidité de l'ensemble.

Le triangle arrière 16 est constitué de trois bielles 6n-2, 6n-1, 6n reliées deux à deux et est fixé par ses sommets au panneau arrière 5 et aux panneaux supérieur 3 et inférieur 4. La structure est ainsi rigidifiée au niveau des quatre angles du caisson.

Le caisson central d'aéronef ainsi constitué peut être utilisé pour recevoir du carburant dans au moins une de ses parties constituantes. A titre d'exemple, la structure selon l'invention peut être utilisée pour un aéronef de très grande taille pour lequel le caisson central de voilure a une masse de l'ordre de 11 tonnes, mesure de l'ordre de 7 mètres de long et de 7 mètres de large sur une hauteur de 2,4 m à l'avant et 1,6 m à l'arrière.

Pour un tel caisson divisé en deux , le gain de masse pour le caisson avant est de 97 kilos pour 11 montants dudit caisson. La flèche des montants sous contrainte est en outre réduite de 6,73 à 3,2 mm alors que la contrainte maximale de fatigue qu'ils sont susceptibles de subir est de 64N/mm² au lieu de 100N/mm².

Dans le cas de certification dit de « crash carburant », la contrainte maximale appliquée sur les montants du panneau avant détermine sa section et la structure triangulée selon l'invention, telle que représentée en figure 4, permet de diviser par 4 la contrainte maximale appliquée sur les montants et le panneau avant, le moment de flexion Mf étant égal à -P.L²/32 au lieu de -P.L²/8.

De même, la configuration avec point d'appui médian permet de diviser par 4 les contraintes dans les montants 2b et dans la peau 2c des longerons dues à l'application de la pression cabine. Cette configuration triangulée permet en outre de diviser par 2 la flèche prise par l'ensemble peau/montants.

L'invention ne se limite pas aux exemples représentés et il est notamment possible selon le principe de l'invention de réaliser un caisson central de voilure comportant une pluralités de caissons longitudinaux 13, 14, chaque caisson longitudinal comportant une paroi avant 2, 12 constituant un élément de renfort vertical pourvu d'un triangle de bielles.

## Revendications

1. Structure creuse, en caisson de véhicules, en particulier d'aéronef, comprenant un panneau avant (2), un panneau supérieur (3), un panneau inférieur (4) et un panneau arrière (5) et pourvue d'un dispositif de renfort à bielles comportant un premier triangle de renfort (11) dit triangle de renfort avant, constitué par trois bielles (6a, 6b, 6c) reliées deux à deux, fixé par ses sommets au panneau avant (2) et aux panneaux supérieur et inférieur (3, 4), les premières et deuxièmes bielles formant le sommet du triangle de renfort avant étant les seuls bielles raccordées au panneau avant
**caractérisée en ce qu'**elle comprend au moins une cloison intermédiaire (12) entre le panneau avant (2) et le panneau arrière (5) et définissant un caisson avant (13) et un caisson arrière (14), un deuxième triangle de renfort (15), dit triangle de renfort intermédiaire, étant réalisé au niveau de la cloison intermédiaire (12), ledit triangle intermédiaire (15) est disposé dans le caisson arrière (14).

2. Structure creuse selon la revendication 1 **caractérisée en ce que** le sommet du triangle de renfort avant (11) est fixé au panneau avant (2) en position sensiblement médiane de la hauteur de ce dernier.

3. Structure creuse selon l'une quelconques des revendications 1 à 2 **caractérisée en ce qu'**elle comprend un triangle de renfort arrière (16), constitué de trois bielles (6n-2, 6n-1, 6n) reliées deux à deux et fixé par ses sommets au panneau arrière (5) et aux panneaux supérieur (3) et inférieur (4).

4. Structure creuse selon l'une quelconque des revendications 1 à 3 **caractérisée en ce qu'**elle comporte un dispositif de renfort pourvu de n bielles (6a, 6b, ..., 6n) reliant les panneaux (2, 3, 4, 5), le nombre total de bielles (6a, 6b, ..., 6n) additionné au nombre de sections (S1, S2, ...) de panneaux entre bielles étant égal au double de la somme du nombre total de nœuds (N1, N2, ...) de liaison entre bielles et panneaux et du nombre de liaisons (K1, K2, ...) entre panneaux, **caractérisée en ce qu'**elle comporte une pluralité de triangles de renfort longitudinaux (11, 15, 16) chaque triangle longitudinal comportant une pointe fixée en partie sensiblement médiane d'un élément de renfort vertical (2, 12, 5) solidaire des panneaux inférieur et supérieur.

5. Structure creuse selon la revendication 4 **caractérisée en ce qu'**elle comporte une pluralité de caissons longitudinaux (13, 14), chaque caisson longitudinal comportant une paroi avant (2, 12) constituant ledit élément de renfort vertical.

6. Structure creuse selon l'une quelconque des revendications 1 à 5 **caractérisée en ce qu'**elle constitue un caisson central d'aéronef dont au moins une partie reçoit du carburant.

## Patentansprüche

1. Hohlstruktur in einem Kasten von Fahrzeugen, insbesondere von einem Flugzeug, welche eine vordere Platte (2), eine obere Platte (3), eine untere Platte (4) und eine hintere Platte (5) aufweist und mit einer Verstärkungsvorrichtung mit Verbindungsstangen versehen ist, welche ein erstes Verstärkungsdreieck (11), so genanntes vorderes Verstärkungsdreieck, umfasst, welches von drei paarweise verbundenen Verbindungsstangen (6a, 6b, 6c) gebildet wird, welches über seine Eckpunkte an der vorderen Platte (2) und an der oberen und unteren Platte (3, 4) befestigt ist, wobei die erste und zweite Verbindungsstange, welche den vorderen Eckpunkt des Verstärkungsdreiecks bilden, die einzigen Verbindungsstangen sind, welche mit der vorderen Platte verbunden sind,
**dadurch gekennzeichnet, dass** sie mindestens eine Zwischentrennwand (12) zwischen der vorderen Platte (2) und der hinteren Platte (5) aufweist und einen vorderen Kasten (13) und einen hinteren Kasten (14) definiert, wobei ein zweites Verstärkungsdreieck (15), so genanntes Zwischenverstärkungsdreieck, im Bereich der Zwischentrennwand (12) ausgeführt ist, wobei das Zwischendreieck (15) in dem hinteren Kasten (14) angeordnet ist.

2. Hohlstruktur nach Anspruch 1, **dadurch gekennzeichnet, dass** der Eckpunkt des vorderen Verstärkungsdreiecks (11) an der vorderen Platte (2) in einer im wesentlichen mittleren Position der Höhe der letzteren befestigt ist.

3. Hohlstruktur nach einem der Ansprüche 1 bis 2, **dadurch gekennzeichnet, dass** sie ein hinteres Verstärkungsdreieck (16) aufweist, welches aus drei Verbindungsstangen (6n-2, 6n-1, 6n) gebildet wird, welche paarweise verbunden sind, und über seine Eckpunkte an der hinteren Platte (5) und an der oberen (3) und unteren Platte (4) befestigt ist.

4. Hohlstruktur nach einem der Ansprüche 1 bis 3, **dadurch gekennzeichnet, dass** sie eine Verstärkungsvorrichtung mit n Verbindungsstäben (6a, 6b, ..., 6n) umfasst, welche die Platten (2, 3, 4, 5) verbinden, wobei die zu der Anzahl an Teilabschnitten (S1, S2, ...) von Platten zwischen Verbindungsstäben hinzugefügte Gesamtzahl von Verbindungsstangen (6a, 6b, ..., 6n) gleich dem doppelten der Summe aus der Gesamtzahl von Verbindungsknoten (N1, N2, ...) zwischen Verbindungsstangen und Platten und der Anzahl an Verbindungen (K1, K2, ...) zwischen Platten ist, **dadurch gekennzeichnet, dass** sie eine Vielzahl von longitudinalen Verstärkungsdreiecken (11, 15, 16) umfasst, welche eine Spitze aufweisen, die im im wesentlichen mittleren Teil eines fest mit der unteren und oberen Platten verbundenen vertikalen Verstärkungselements (2, 12, 5) befestigt ist.

5. Hohlstruktur nach Anspruch 4, **dadurch gekennzeichnet, dass** sie eine Vielzahl von longitudinalen Kästen (13, 14) umfasst, wobei jeder longitudinale Kasten eine vordere Wand (2, 12) umfasst, welche das vertikale Verstärkungselement bildet.

6. Hohlstruktur nach einem der Ansprüche 1 bis 5, **dadurch gekennzeichnet, dass** sie einen zentralen Flugzeugkasten bildet, von welchem zumindest ein Teil Kraftstoff aufnimmt.

## Claims

1. Hollow box structure of vehicles, in particular of an aircraft, which comprises a front panel (2), a top panel (3), a bottom panel (4) and a rear panel (5) and is provided with a link-rod reinforcing device having a first reinforcing triangle (11), known as front reinforcing triangle, which is made up of three link rods (6a, 6b, 6c) connected in pairs, and which is fastened by way of its apices to the front panel (2) and to the top and bottom panels (3, 4), the first and second link rods forming the apex of the front reinforcing triangle being the only link rods connected to the front panel,
**characterized in that** it comprises at least one intermediate partition (12) between the front panel (2) and the rear panel (5), defining a front box (13) and a rear box (14), a second reinforcing triangle (15), known as intermediate reinforcing triangle, being formed in the region of the intermediate partition (12), said intermediate triangle (15) being disposed in the rear box (14) .

2. Hollow structure according to Claim 1, **characterized in that** the apex of the front reinforcing triangle (11) is fastened to the front panel (2) in an approximately median position with respect to the height of the latter.

3. Hollow structure according to either one of Claims 1 and 2, **characterized in that** it comprises a rear reinforcing triangle (16), which is made up of three link rods (6n-2, 6n-1, 6n) connected in pairs, and is fastened by its apices to the rear panel (5) and to the top panel (3) and bottom panel (4).

4. Hollow structure according to any one of Claims 1 to 3, **characterized in that** it has a reinforcing device provided with n link rods (6a, 6b, ..., 6n) connecting the panels (2, 3, 4, 5), the total number of link rods (6a, 6b, ..., 6n) added to the number of panel sections (S1, S2, ...) between link rods being equal to twice the sum of the total number of connecting nodes (N1, N2, ...) between link rods and panels and the number of connections (K1, K2, ...) between panels, **characterized in that** it has a plurality of longitudinal reinforcing triangles (11, 15, 16), each longitudinal triangle having a point fixed at a substantially median part of a vertical reinforcing element (2, 12, 5) secured to the bottom and top panels.

5. Hollow structure according to Claim 4, **characterized in that** it has a plurality of longitudinal boxes (13, 14), each longitudinal box having a front wall (2, 12) forming said vertical reinforcing element.

6. Hollow structure according to any one of Claims 1 to 5, **characterized in that** it forms a central aircraft box, at least a part of which holds fuel.
